# EUROPEAN PATENT SPECIFICATION

(11) **EP 3 047 119 B1**
(45) Date of publication and mention of the grant of the patent: **15.01.2020**
(21) Application number: 14864478.4
(22) Date of filing: 09.09.2014
(51) Int. Cl.: F01D 25/12, F02C 7/18, F01D 9/02

(54) **COOLING CONFIGURATION FOR ENGINE COMPONENT**
KÜHLKONFIGURATION FÜR MOTORKOMPONENTEN
CONFIGURATION DE REFROIDISSEMENT POUR UN COMPOSANT DE MOTEUR

(30) Priority: 09.09.2013 US 201361875328 P
(43) Date of publication of application: 27.07.2016
(73) Proprietor: United Technologies Corporation, Farmington, CT 06032 (US)
(72) Inventor: SNYDER, Brooks E., Glastonbury, Connecticut 06033 (US); SLAVENS, Thomas N., Moodus, CT 06469 (US)
(74) Representative: Dehns
(86) International application number: PCT/US2014/054730
(87) International publication number: WO 2015/076909

(56) References cited:
- WO-A1-2014/151239
- WO-A2-2014/175951
- US-A- 5 002 460
- US-A- 5 704 763
- US-A- 5 993 156
- US-A1- 2012 076 665
- US-A1- 2013 071 562

## Description

### BACKGROUND

Gas turbine engines typically include a compressor section, a combustor section and a turbine section. During operation, air is pressurized in the compressor section and is mixed with fuel and burned in the combustor section to generate hot combustion gases. The hot combustion gases are communicated through the turbine section, which extracts energy from the hot combustion gases to power the compressor section and other gas turbine engine loads.

Both the compressor and turbine sections may include alternating arrays of rotating blades and stationary vanes that extend into the core flow path of the gas turbine engine. For example, in the turbine section, turbine blades rotate and extract energy from the hot combustion gases that are communicated along the core flow path of the gas turbine engine. The turbine vanes, which generally do not rotate, guide the airflow and prepare it for the next set of blades. Stationary vanes, and in particular those located in the turbine section, are cooled to increase performance and service life. One known cooling technique includes providing an internal cooling passageway within the interior of the vane. Examples are shown in WO-2014/151239, WO-2014/175951 and EP-0887515.

### SUMMARY

One exemplary embodiment of this disclosure relates to a gas turbine engine. The engine includes a component having a first wall, which is an airfoil wall, and a second wall, which is an inner wall, spaced-apart from the first wall. The component further includes a cooling passageway provided in part by a helical wall between the first wall and the second wall, which is substantially hollow, and circumscribes the central component axis to provide a core passageway.

In a further embodiment of any of the above, the helical wall extends between the first wall and the second wall in a direction normal to the component axis.

In a further embodiment of any of the above, the helical wall is arranged to substantially follow a helical curve around the component axis at an angle inclined relative to a line normal to the component axis.

In a further embodiment of any of the above, the cooling passageway is bounded by the helical wall, the first wall, and the second wall.

In a further embodiment of any of the above, a distance between the first wall and the second wall varies along the component axis to vary the cross-sectional area of the cooling passageway.

In a further embodiment of any of the above, a cross-sectional area of the cooling passageway is greater adjacent a trailing edge of the component than the leading edge of the component.

In a further embodiment of any of the above, the component includes a first helical wall and a second helical wall between the first wall and the second wall, the first helical wall spaced-apart from the second helical wall.

In a further embodiment of any of the above, the component includes a leading edge cooling passageway provided between a leading edge of the component and a lateral divider adjacent the leading edge.

In a further embodiment of any of the above, the component includes a trailing edge passageway provided between a trailing edge of the component and a lateral divider adjacent the trailing edge.

In a further embodiment of any of the above, the component is a vane, and wherein the cooling passageway is provided in an airfoil section of the vane.

In a further embodiment of any of the above, the component is formed using an additive manufacturing technique.

In a further embodiment of any of the above, the first wall is a gas-path wall exposed to a core flow path of the gas turbine engine, and the second wall is a non-gas-path wall.

Another exemplary embodiment of this disclosure relates to an engine component. The engine component includes a first wall, a second wall spaced from the first wall, and a cooling passageway provided by a helical wall between the first wall and the second wall.

In a further embodiment of any of the above, the helical wall is arranged to substantially follow a helical curve around an axis of the engine component at an angle inclined relative to a line normal to the axis of the engine component.

In a further embodiment of any of the above, the engine component includes a first helical wall and a second helical wall between the first wall and the second wall, the first helical wall spaced apart from the second helical wall.

In a further embodiment of any of the above, the component includes a leading edge cooling passageway provided between a leading edge of the engine component and a lateral divider adjacent the leading edge.

In a further embodiment of any of the above, the component includes a trailing edge passageway provided between a trailing edge of the engine component and a lateral divider adjacent the trailing edge.

Another exemplary embodiment of this disclosure relates to a method of forming an engine component. The method includes forming an engine component using an additive manufacturing technique. The engine component has a cooling passageway provided in part by a helical wall.

In a further embodiment of any of the above, the engine component includes an airfoil wall and an inner wall spaced inwardly from the airfoil wall, and wherein the airfoil wall, the inner wall, and the helical wall are integrally formed with one another.

In a further embodiment of any of the above, the additive manufacturing technique includes building-up layers of material to form the engine component.

The embodiments, examples and alternatives of the preceding paragraphs, the claims, or the following description and drawings, including any of their various aspects or respective individual features, may be taken independently or in any combination. Features described in connection with one embodiment are applicable to all embodiments, unless such features are incompatible.

### BRIEF DESCRIPTION OF THE DRAWINGS

The drawings can be briefly described as follows:
Figure 1 schematically illustrates a gas turbine engine embodiment.
Figure 2 is perspective view of an example engine component.
Figure 3 is a broken-away view of the airfoil section of the component of Figure 2, and illustrates a cooling arrangement according to this disclosure.

### DETAILED DESCRIPTION

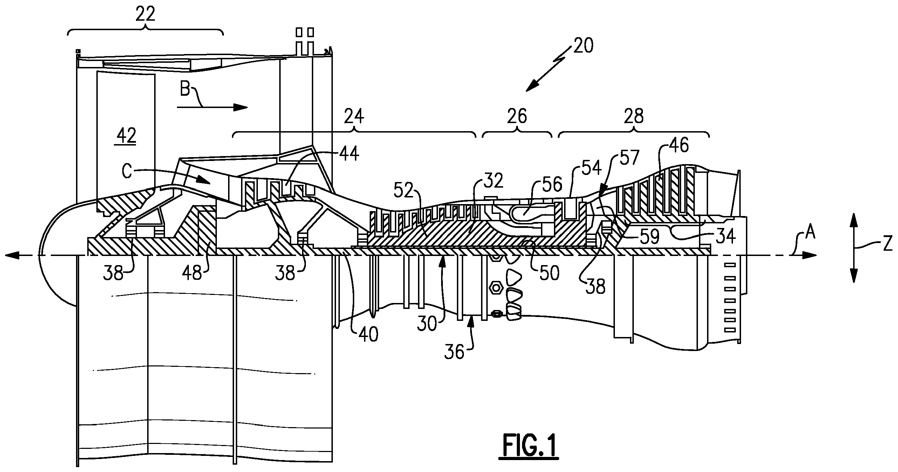

Figure 1 schematically illustrates an example gas turbine engine 20 that includes a fan section 22, a compressor section 24, a combustor section 26 and a turbine section 28. Alternative engines might include an augmenter section (not shown) among other systems or features. The fan section 22 drives air along a bypass flow path B while the compressor section 24 draws a core air flow C along a core flow path where air is compressed and communicated to a combustor section 26. In the combustor section 26, air is mixed with fuel and ignited to generate a high pressure exhaust gas stream that expands through the turbine section 28 where energy is extracted and utilized to drive the fan section 22 and the compressor section 24.

Although the disclosed non-limiting embodiment depicts a turbofan gas turbine engine, it should be understood that the concepts described herein are not limited to use with turbofans as the teachings may be applied to other types of turbine engines; for example a turbine engine including a three-spool architecture in which three spools concentrically rotate about a common axis and where a low spool enables a low pressure turbine to drive a fan via a gearbox, an intermediate spool that enables an intermediate pressure turbine to drive a first compressor of the compressor section, and a high spool that enables a high pressure turbine to drive a high pressure compressor of the compressor section. The concepts disclosed herein can further be applied outside of gas turbine engines, such as in the context of wind turbines.

The example engine 20 generally includes a low speed spool 30 and a high speed spool 32 mounted for rotation about an engine central longitudinal axis A relative to an engine static structure 36 via several bearing systems 38. It should be understood that various bearing systems 38 at various locations may alternatively or additionally be provided.

The low speed spool 30 generally includes an inner shaft 40 that connects a fan 42 and a low pressure (or first) compressor section 44 to a low pressure (or first) turbine section 46. The inner shaft 40 drives the fan 42 through a speed change device, such as a geared architecture 48, to drive the fan 42 at a lower speed than the low speed spool 30. The high-speed spool 32 includes an outer shaft 50 that interconnects a high pressure (or second) compressor section 52 and a high pressure (or second) turbine section 54. The inner shaft 40 and the outer shaft 50 are concentric and rotate via the bearing systems 38 about the engine central longitudinal axis A.

A combustor 56 is arranged between the high pressure compressor 52 and the high pressure turbine 54. In one example, the high pressure turbine 54 includes at least two stages to provide a double stage high pressure turbine 54. In another example, the high pressure turbine 54 includes only a single stage. As used herein, a "high pressure" compressor or turbine experiences a higher pressure than a corresponding "low pressure" compressor or turbine.

The example low pressure turbine 46 has a pressure ratio that is greater than about five (5). The pressure ratio of the example low pressure turbine 46 is measured prior to an inlet of the low pressure turbine 46 as related to the pressure measured at the outlet of the low pressure turbine 46 prior to an exhaust nozzle.

A mid-turbine frame 57 of the engine static structure 36 is arranged generally between the high pressure turbine 54 and the low pressure turbine 46. The mid-turbine frame 57 further supports bearing systems 38 in the turbine section 28 as well as setting airflow entering the low pressure turbine 46.

The core airflow C within the core flow path is compressed by the low pressure compressor 44, then by the high pressure compressor 52, mixed with fuel and ignited in the combustor 56 to produce high speed exhaust gases that are then expanded through the high pressure turbine 54 and low pressure turbine 46. The mid-turbine frame 57 includes vanes 59, which are in the core airflow path and function as an inlet guide vane for the low pressure turbine 46. Utilizing the vane 59 of the mid-turbine frame 57 as the inlet guide vane for low pressure turbine 46 decreases the length of the low pressure turbine 46 without increasing the axial length of the mid-turbine frame 57. Reducing or eliminating the number of vanes in the low pressure turbine 46 shortens the axial length of the turbine section 28. Thus, the compactness of the gas turbine engine 20 is increased and a higher power density may be achieved.

The disclosed gas turbine engine 20 in one example is a high-bypass geared aircraft engine. In a further example, the gas turbine engine 20 includes a bypass ratio greater than about six (6), with an example embodiment being greater than about ten (10). The example geared architecture 48 is an epicyclical gear train, such as a planetary gear system, star gear system or other known gear system, with a gear reduction ratio of greater than about 2.3.

In one disclosed embodiment, the gas turbine engine 20 includes a bypass ratio greater than about ten (10:1) and the fan diameter is significantly larger than an outer diameter of the low pressure compressor 44. It should be understood, however, that the above parameters are only exemplary of one embodiment of a gas turbine engine including a geared architecture and that the present disclosure is applicable to other gas turbine engines.

A significant amount of thrust is provided by the bypass flow B due to the high bypass ratio. The fan section 22 of the engine 20 is designed for a particular flight condition -- typically cruise at about 0.8 Mach and about 35,000 feet. The flight condition of 0.8 Mach and 35,000 ft., with the engine at its best fuel consumption - also known as "bucket cruise Thrust Specific Fuel Consumption ('TSFC')" - is the industry standard parameter of pound-mass (lbm) of fuel per hour being burned divided by pound-force (lbf) of thrust the engine produces at that minimum point.

"Low fan pressure ratio" is the pressure ratio across the fan blade alone, without a Fan Exit Guide Vane ("FEGV") system. The low fan pressure ratio as disclosed herein according to one non-limiting embodiment is less than about 1.50. In another non-limiting embodiment the low fan pressure ratio is less than about 1.45.

"Low corrected fan tip speed" is the actual fan tip speed in ft/sec divided by an industry standard temperature correction of [(Tram °R) / (518.7 °R)]^{0.5}. The "Low corrected fan tip speed," as disclosed herein according to one non-limiting embodiment, is less than about 1150 ft/second.

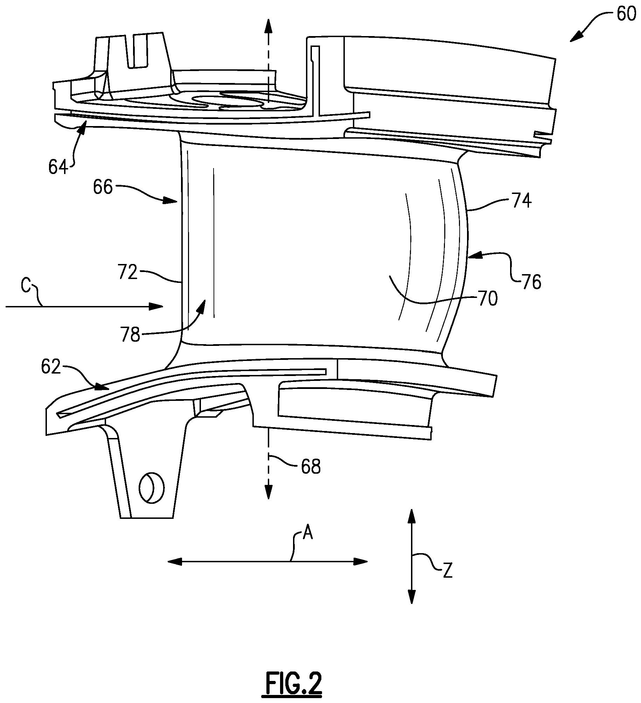

Figure 2 illustrates an example gas turbine engine component 60. In the example, the component 60 is a stator vane. However, this disclosure extends to rotor blades, inlet guide vanes (e.g., the vanes 59 of the mid-turbine frame 57), and other engine components such as blade outer air seals (BOAS). This disclosure may be particularly beneficial when used in the turbine section 28, as components in this portion of the engine 20 are exposed to relatively high temperatures during engine operation.

The component 60 includes an inner platform 62, an outer platform 64 radially outward of the inner platform 62, and an airfoil section 66 extending radially between the inner and outer platforms 62, 64 along a component axis 68. In this example, the component 60 is mounted such that the component axis 68 extends in a radial direction Z, which is normal to the engine central longitudinal axis A.

The airfoil section 66 is primarily defined by an airfoil wall 70, which provides a leading edge 72, a trailing edge 74, and opposed pressure and suction sides 76, 78 extending between the leading edge 72 and the trailing edge 74. In this example the airfoil wall 70 is a gas path wall, in that an exterior surface of the airfoil wall 70 will be exposed to a core air flow C during engine operation.

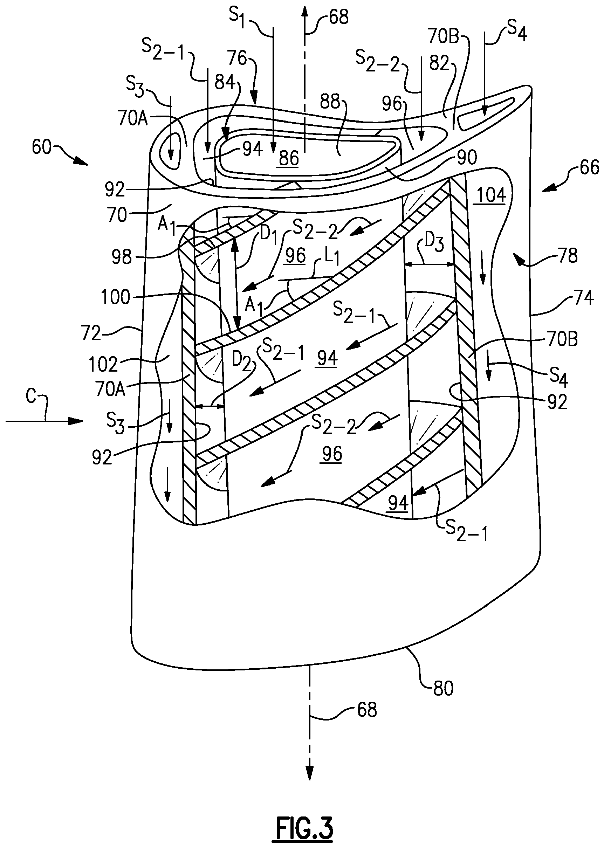

Figure 3 illustrates the airfoil section 66 of the engine component 60. For clarity, a portion of the airfoil wall 70 is broken-away to show the detail of the interior of the airfoil section 66. Further, the inner and outer platforms 62, 64 are not illustrated in Figure 3. The airfoil section 66 includes a radially inner surface 80, and a radially outer surface 82, which would be positioned adjacent the inner and outer platform 62, 64, respectively.

In this example, the engine component 60 includes an inner wall 84, which is substantially hollow, and circumscribes the component axis 68 to provide a core passageway 86. The inner wall 84 includes an interior surface 88 facing the core passageway 86, and an exterior surface 90 facing away from the component axis 68. The inner wall 84 in this example is a non-gas-path wall, in that the inner wall 84 will not be directly exposed to a core air flow C during engine operation.

At least one cooling passageway is provided between the exterior surface 90 of the inner wall 84 and an interior surface 92 of the airfoil section 66. In this example, the interior surface 92 is provided by an inner surface of the airfoil wall 70 (in particular, the pressure and suction sides 76, 78 thereof), a first lateral divider 70A, and a second lateral divider 70B. As will be explained below, the first and second lateral dividers 70A, 70B are not required in all examples. In such examples, an interior surface of the airfoil wall 70 alone may provide the interior surface 92.

The component 60 includes first and second helical passageways 94, 96 provided between the exterior surface 90 and the interior surface 92. The component further includes first and second helical walls 98, 100 extending in a direction normal to the component axis 68 to connect the exterior surface 90 to the interior surface 92. In another example, the first and second helical walls 98, 100 are sloped relative to the component axis. Together with the exterior surface 90 and the interior surface 92, the first and second helical walls 98, 100 bound the first and second helical passageways 94, 96. The first and second helical walls 98, 100 are arranged to substantially follow a helical curve around the central component axis 68 at an angle A₁ inclined relative to a line L₁ normal to the component axis 68. The term "substantially" is used herein to account for acceptable tolerances in this industry.

While the illustrated component 60 includes two helical walls (e.g., the first and second helical walls 98, 100), it should be understood that components having a different number of helical walls come within the scope of this disclosure. For example, the component 60 could include a single helical wall, or could include additional helical walls (e.g., three or four), as desired.

In this example, the airfoil wall 70 includes a first lateral divider 70A adjacent the leading edge 72 of the airfoil section 66, and a second lateral divider 70B adjacent the trailing edge 74 of the airfoil section 66. The first and second lateral dividers 70A, 70B extend between the pressure and suction sides 76, 78. As mentioned above, the surfaces of the first and second lateral dividers 70A, 70B facing the component axis 68 provide a portion of the interior surface 92. The lateral dividers 70A, 70B in this example further bound leading and trailing edge cooling passageways 102, 104, respectively.

A leading edge cooling passageway 102 is provided between the first lateral divider 70A and the airfoil wall 70 adjacent the leading edge 72 of the airfoil section 66. Likewise, a trailing edge cooling passageway 104 is provided between the second lateral divider 70B and airfoil wall 70 adjacent the trailing edge 74. While illustrated in Figure 3, the first and second lateral dividers 70A, 70B are not required. In such an example, the first and second helical passageways 94, 96 alone would cool the leading edge 72 and trailing edge 74 of the component 60.

During operation of the engine 20, a cooling flow is directed toward the component 60 from a radially outer source, in one example. A first portion S₁ of the cooling flow is directed into the core passageway 84, and flows downstream toward a rotor hub, for example.

Another portion of a cooling flow of fluid is provided between the exterior surface 90 and the interior surface 92. In this example, because there are first and second helical walls 98, 100, the cooling flow is illustrated as two flows S₂₋₁ and S₂₋₂. As the fluid is directed toward the component 60, the fluid will divide into one of the two flows S₂₋₁, S₂₋₂, and enter one of the two helical passageways 94, 96. Alternatively, the passageways 94, 96 could be provided with separate, dedicated flows. The flows S₂₋₁ and S₂₋₂ are circulated helically around the inner wall 84, about the component axis 68, and travel axially from the radially outer surface 82 toward the radially inner surface 80 of the airfoil section 66 within a respective one of the passageways 94, 96. The flows S₂₋₁ and S₂₋₂ provide effective cooling of the airfoil wall 70, which is exposed to relatively high temperatures from the core airflow C during operation of the engine 20.

Third and fourth portions S₃, S₄ of the secondary cooling flow are directed to the leading edge and trailing edge passageways 102, 104 in the illustrated example. These dedicated passageways 102, 104 for the leading edge 72 and the trailing edge 74 provide increased cooling at these locations. Again, however, the leading edge and trailing edge passageways 102, 104 are not required, and the level of cooling provided by the helical passageways 94, 96 may be adequate in some examples.

In one example, the first and second lateral dividers 70A, 70B completely separate the third and fourth flows S₃, S₄ from the flows S₂₋₁ and S₂₋₂. In other examples, however, the first and second lateral dividers 70A, 70B allow fluid to communicate between the passageways 102, 104 and the helical passageways 94, 96.

The cross-sectional area of the first and second helical passageways 94, 96 affects the level of heat transfer between the flows S₂₋₁, S₂₋₂ and the airfoil wall 70. Consistent with this disclosure, one can tailor the cross-sectional area of the helical passageways 94, 96 to selectively increase and decrease the level of cooling along the airfoil section 66.

For instance, the first helical wall 98 and the second helical wall 100 are spaced apart from one another, relative to the component axis 68, by a first distance D₁. This distance D₁ may be selected to provide an appropriate cross-section for the first and second helical passageways 94, 96. In the illustrated embodiment, the first and second helical walls 98, 100 maintain a constant angle A₁ as the first and second helical walls extend along the component axis 68. In this example, the first distance D₁ is held constant along the component axis 68. However, it should be understood that the first distance D₁ could vary to change the cross-sectional area of the helical passageways 94, 96 and to selectively provide an appropriate level of cooling at desired locations.

Similarly, the distance between the exterior surface 90 and the interior surface 92 can be varied. In the disclosed embodiment, the exterior surface 90 is spaced a distance D₂ from the interior surface 92 adjacent the leading edge 72, while the exterior surface 90 is spaced a distance D₃ from the interior surface 92 adjacent the trailing edge. The distance D₃ is larger than the distance D₂, which provides the first and second helical passageways 94, 96 with a smaller cross-sectional area adjacent the leading edge 72, and a greater cross-sectional area adjacent the trailing edge 74. This, in turn, provides for increased heat transfer (e.g., cooling) of the airfoil wall 70 adjacent the leading edge 72.

It should be understood that this disclosure may be built using any known technique. In one example, the component 60 is formed using an additive manufacturing technique, in which layers of material are successively built-up onto one another to form the component 60. That is, in one example, the entirety of the component 60 is formed using additive manufacturing, such that the various structures described above are integrally formed with one another. For instance, the inner wall 84, the airfoil wall 70, and the first and second helical walls 98, 100 are each integrally formed together with one another as one structural piece.

In one known additive manufacturing technique, a layer of powdered material (e.g., metal) is provided onto a bed and selectively heated (e.g., melted) by a laser, using electron beam melting, or by high-speed accumulation combined with laser sintering, as examples. The technique may use materials capable of equiax grain boundaries. Further, the technique may use ceramic-to-metal mixing of powders to provide a functionally graded material (FGM).

The heated material is allowed to cool to form a first layer of the component. Additional powdered material is provided onto the bed, and another layer of material is melted onto the first layer, and allowed to cool. The process repeats, incrementally building-up the component with each layer. Additive manufacturing techniques are particularly beneficial for forming components with intricate internal passageways, such as the first and second helical walls 98, 100, which are not easily formed using other, conventional machining techniques.

The component 60 may be manufactured of separate cores. In one example, at least an interior core (e.g., an interior core providing at least the inner wall 84 and the first and second helical passageways 98, 100) is additively manufactured and is then inserted into an outer core. The outer core may or may not be additively manufactured. The inner and outer cores are then joined together.

While the flows S₁, S₂₋₁, S₂₋₂, S₃ and S₄ have been described above as being portions of a secondary cooling airflow, these flows could be provided by separate, dedicated flows of fluid.

Although the different examples have the specific components shown in the illustrations, embodiments of this disclosure are not limited to those particular combinations. It is possible to use some of the components or features from one of the examples in combination with features or components from another one of the examples.

One of ordinary skill in this art would understand that the above-described embodiments are exemplary and non-limiting. That is, modifications of this disclosure would come within the scope of the claims. Accordingly, the following claims should be studied to determine their true scope and content.

## Claims

1. An engine component (60), comprising:
a first wall (70); which is an airfoil wall;
a second wall (84); which is an inner wall; spaced from the first wall (70); and
a cooling passageway provided by a helical wall (98) between the first wall (70) and the second wall (84); and
**characterised in that** the second wall (84) is substantially hollow and circumscribes the central component axis (68) to provide a core passageway (86).

2. The engine component (60) as recited in claim 1, wherein the helical wall (98) is arranged to substantially follow a helical curve around an axis of the engine component at an angle inclined relative to a line normal to the axis of the engine component (60).

3. The engine component as recited in claim 1, wherein the engine component (60) includes a first helical wall (98) and a second helical wall (100) between the first wall (70) and the second wall (84), the first helical wall (98) spaced apart from the second helical wall (100).

4. The engine component as recited in claim 1, including a leading edge cooling passageway provided between a leading edge (72) of the engine component and a lateral divider adjacent the leading edge.

5. The engine component as recited in claim 1, including a trailing edge passageway provided between a trailing edge (74) of the engine component and a lateral divider adjacent the trailing edge.

6. A gas turbine engine, comprising:
the component (60) of any preceding claim.

7. The gas turbine engine as recited in claim 6, wherein the helical wall (98) extends between the first wall (70) and the second wall (84) in a direction normal to the component axis.

8. The gas turbine engine as recited in claim 7, wherein the helical wall (98) is arranged to substantially follow a helical curve around the component axis at an angle inclined relative to a line normal to the component axis.

9. The gas turbine engine as recited in any of claims 6 to 8, wherein the cooling passageway is bounded by the helical wall (98), the first wall (70), and the second wall (84).

10. The gas turbine engine as recited in any of claims 6 to 9, wherein a distance between the first wall (70) and the second wall (84) varies along the component axis to vary the cross-sectional area of the cooling passageway, and preferably wherein a cross-sectional area of the cooling passageway is greater adjacent a trailing edge (72) of the component than the leading edge (74) of the component.

11. The gas turbine engine as recited in any of claims 6 to 10, wherein the component (60) is a vane, and wherein the cooling passageway is provided in an airfoil section (66) of the vane.

12. The gas turbine engine as recited in any of claims 6 to 11, wherein the component (60) is formed using an additive manufacturing technique.

13. The gas turbine engine as recited in any of claims 6 to 12, wherein the first wall (70) is a gas-path wall exposed to a core flow path of the gas turbine engine, and the second wall (84) is a non-gas-path wall.

14. A method of forming an engine component as claimed in claim 1, comprising:
forming the engine component (60) using an additive manufacturing technique, the engine component (60) having a cooling passageway provided in part by a helical wall (98).

15. The method as recited in claim 14, wherein the engine component includes an airfoil wall (70) and an inner wall (84) spaced inwardly from the airfoil wall (70), and wherein the airfoil wall (70), the inner wall (84), and the helical wall (98) are integrally formed with one another, and/or wherein the additive manufacturing technique includes building-up layers of material to form the engine component.

## Patentansprüche

1. Motorkomponente (60), umfassend:
eine erste Wand (70), die eine Schaufelprofilwand ist;
eine zweite Wand (84), die eine Innenwand ist;
die von der ersten Wand (70) beabstandet ist; und
einen Kühlkanal, der von einer schraubenförmigen Wand (98) zwischen der ersten Wand (70) und der zweiten Wand (84) bereitgestellt wird; und
**dadurch gekennzeichnet, dass** die zweite Wand (84) im Wesentlichen hohl ist und die mittlere Komponentenachse (68) umgibt, um einen Kernkanal (86) bereitzustellen.

2. Motorkomponente (60) nach Anspruch 1, wobei die schraubenförmige Wand (98) ausgelegt ist, um im Wesentlichen einer schraubenförmigen Kurve um eine Achse der Motorkomponente in einem Winkel, der in Bezug auf eine Linie senkrecht zur Achse der Motorkomponente (60) geneigt ist, zu folgen.

3. Motorkomponente nach Anspruch 1, wobei die Motorkomponente (60) eine erste schraubenförmige Wand (98) und eine zweite schraubenförmige Wand (100) zwischen der ersten Wand (70) und der zweiten Wand (84) beinhaltet, wobei die erste schraubenförmige Wand (98) von der zweiten schraubenförmigen Wand (100) beabstandet ist.

4. Motorkomponente nach Anspruch 1, beinhaltend einen Vorderkantenkühlkanal, der zwischen einer Vorderkante (72) der Motorkomponente und einer seitlichen Trennwand angrenzend an die Vorderkante bereitgestellt ist.

5. Motorkomponente nach Anspruch 1, umfassend einen Hinterkantenkühlkanal, der zwischen einer Hinterkante (74) der Motorkomponente und einer seitlichen Trennwand angrenzend an die Hinterkante bereitgestellt ist.

6. Gasturbinentriebwerk, umfassend:
die Komponente (60) nach einem der vorstehenden Ansprüche.

7. Gasturbinentriebwerk nach Anspruch 6, wobei die schraubenförmige Wand (98) zwischen der ersten Wand (70) und der zweiten Wand (84) in einer Richtung senkrecht zur Komponentenachse verläuft.

8. Gasturbinentriebwerk nach Anspruch 7, wobei die schraubenförmige Wand (98) so ausgelegt ist, dass sie im Wesentlichen einer schraubenförmigen Kurve um die Komponentenachse in einem Winkel, der relativ zu einer Linie senkrecht zur Komponentenachse geneigt ist, folgt.

9. Gasturbinentriebwerk nach einem der Ansprüche 6 bis 8, wobei der Kühlkanal durch die schraubenförmige Wand (98), die erste Wand (70) und die zweite Wand (84) begrenzt ist.

10. Gasturbinentriebwerk nach einem der Ansprüche 6 bis 9, wobei ein Abstand zwischen der ersten Wand (70) und der zweiten Wand (84) entlang der Komponentenachse variiert, um die Querschnittsfläche des Kühlkanals zu verändern, und wobei vorzugsweise eine Querschnittsfläche des Kühlkanals angrenzend an eine Hinterkante (72) der Komponente größer ist als an der Vorderkante (74) der Komponente.

11. Gasturbinentriebwerk nach einem der Ansprüche 6 bis 10, wobei die Komponente (60) eine Leitschaufel ist und wobei der Kühlkanal in einem Schaufelprofilabschnitt (66) der Leitschaufel bereitgestellt ist.

12. Gasturbinentriebwerk nach einem der Ansprüche 6 bis 11, wobei die Komponente (60) unter Verwendung eines Verfahrens der generativen Fertigung hergestellt ist.

13. Gasturbinentriebwerk nach einem der Ansprüche 6 bis 12, wobei die erste Wand (70) eine Gaspfadwand ist, die einem Kernströmungspfad des Gasturbinentriebwerks ausgesetzt ist, and die zweite Wand (84) eine Nicht-Gaspfadwand ist.

14. Verfahren zum Herstellen einer Motorkomponente nach Anspruch 1, umfassend:
Herstellen der Motorkomponente (60) unter Verwendung eines Verfahrens der generativen Fertigung, wobei die Motorkomponente (60) einen Kühlkanal aufweist, der zum Teil durch eine schraubenförmige Wand (98) bereitgestellt wird.

15. Verfahren nach Anspruch 14, wobei die Motorkomponente eine Schaufelprofilwand (70) und eine Innenwand (84), die einwärts von der Schaufelprofilwand (70) beabstandet ist, beinhaltet und wobei die Schaufelprofilwand (70), die Innenwand (84) und die schraubenförmige Wand (98) miteinander integriert ausgebildet sind, und/oder wobei das Verfahren der generativen Fertigung das Aufbauen von Schichten aus Material, um die Motorkomponente herzustellen, beinhaltet.

## Revendications

1. Composant de moteur (60), comprenant :
une première paroi (70) ; qui est une paroi de profil aérodynamique ;
une seconde paroi (84) ; qui est une paroi interne ; espacée de la première paroi (70) ; et
un passage de refroidissement formé par une paroi hélicoïdale (98) entre la première paroi (70) et la seconde paroi (84) ; et
**caractérisé en ce que** la seconde paroi (84) est sensiblement creuse et entoure l'axe de composant central (68) pour former un passage central (86).

2. Composant de moteur (60) selon la revendication 1, dans lequel la paroi hélicoïdale (98) est agencée pour suivre sensiblement une courbe hélicoïdale autour d'un axe du composant de moteur selon un angle incliné par rapport à une ligne perpendiculaire à l'axe du composant de moteur (60).

3. Composant de moteur selon la revendication 1, dans lequel le composant de moteur (60) comporte une première paroi hélicoïdale (98) et une seconde paroi hélicoïdale (100) entre la première paroi (70) et la seconde paroi (84), la première paroi hélicoïdale (98) étant espacée de la seconde paroi hélicoïdale (100).

4. Composant de moteur selon la revendication 1, comportant un passage de refroidissement de bord d'attaque prévu entre un bord d'attaque (72) du composant de moteur et un diviseur latéral adjacent au bord d'attaque.

5. Composant de moteur selon la revendication 1, comportant un passage de bord de fuite prévu entre un bord de fuite (74) du composant de moteur et un diviseur latéral adjacent au bord de fuite.

6. Moteur à turbine à gaz, comprenant :
le composant (60) selon une quelconque revendication précédente.

7. Moteur à turbine à gaz selon la revendication 6, dans lequel la paroi hélicoïdale (98) s'étend entre la première paroi (70) et la seconde paroi (84) dans une direction perpendiculaire à l'axe de composant.

8. Moteur à turbine à gaz selon la revendication 7, dans lequel la paroi hélicoïdale (98) est agencée pour suivre sensiblement une courbe hélicoïdale autour de l'axe de composant selon un angle incliné par rapport à une ligne perpendiculaire à l'axe de composant.

9. Moteur à turbine à gaz selon l'une quelconque des revendications 6 à 8, dans lequel le passage de refroidissement est délimité par la paroi hélicoïdale (98), la première paroi (70) et la seconde paroi (84).

10. Moteur à turbine à gaz selon l'une quelconque des revendications 6 à 9, dans lequel une distance entre la première paroi (70) et la seconde paroi (84) varie le long de l'axe de composant afin de faire varier la surface transversale du passage de refroidissement, et de préférence dans lequel une surface transversale du passage de refroidissement est plus grande adjacente à un bord de fuite (72) du composant par rapport au bord d'attaque (74) du composant.

11. Moteur à turbine à gaz selon l'une quelconque des revendications 6 à 10, dans lequel le composant (60) est une aube, et dans lequel le passage de refroidissement est prévu dans une section de profil aérodynamique (66) de l'aube.

12. Moteur à turbine à gaz selon l'une quelconque des revendications 6 à 11, dans lequel le composant (60) est formé à l'aide d'une technique de fabrication additive.

13. Moteur à turbine à gaz selon l'une quelconque des revendications 6 à 12, dans lequel la première paroi (70) est une paroi de trajet de gaz exposée à un trajet d'écoulement central du moteur à turbine à gaz, et la seconde paroi (84) est une paroi sans trajet de gaz.

14. Procédé de formation d'un composant de moteur selon la revendication 1, comprenant :
la formation du composant de moteur (60) à l'aide d'une technique de fabrication additive, le composant de moteur (60) ayant un passage de refroidissement formé en partie par une paroi hélicoïdale (98).

15. Procédé selon la revendication 14, dans lequel le composant de moteur comporte une paroi de profil aérodynamique (70) et une paroi interne (84) espacée vers l'intérieur depuis la paroi de profil aérodynamique (70), et dans lequel la paroi de profil aérodynamique (70), la paroi interne (84) et la paroi hélicoïdale (98) sont intégralement formées les unes avec les autres et/ou dans lequel la technique de fabrication additive comporte la constitution de couches de matériau pour former le composant de moteur.
